# EUROPEAN PATENT SPECIFICATION

(11) **EP 0 948 225 B1**
(45) Date of publication and mention of the grant of the patent: **30.07.2008**
(21) Application number: 98400806.0
(22) Date of filing: 03.04.1998
(51) Int. Cl.: H04Q 7/32, H04M 1/00

(54) **Method and apparatus for service selection for a device**
Verfahren und Vorrichtung für Dienstselektion in einem Gerät
Méthode et dispositif pour la sélection de services offerts par un appareil

(43) Date of publication of application: 06.10.1999
(73) Proprietor: MOTOROLA SEMICONDUCTEURS S.A., 31023 Toulouse Cédex (FR)
(72) Inventor: Abdesselem, Ouelid, 31000 Toulouse (FR)
(74) Representative: Cross, Rupert Edward Blount

(56) References cited:
- EP-A- 0 365 200
- EP-A- 0 632 360
- WO-A-94/21085
- WO-A-97/29606

## Description

The present invention relates to a method and apparatus for service selection for a device. In particular, the present invention relates to a method and apparatus for service selection for a portable communications device or a part of such a device during normal usage, during testing as part of a manufacturing process or during the downloading of possible new services in the form of software.

Conventional portable communications devices such as mobile telephones in particular are designed to be able to offer a predetermined set of services to the user, which services are selected by the manufacturer with more expensive devices being able to offer a greater number of services than those offered by similar less expensive devices. Additionally or alternatively, the services offered to a user by more expensive telephones are often thought of as being of a better quality than similar services offered by less expensive devices. For example, an expensive mobile telephone might offer enhanced full-rate or half-rate transmission and reception modes where a less expensive telephone might only offer a standard full-rate transmission mode instead. Furthermore, an expensive telephone might offer additional services such as encryption/decryption or voice recognition services where a less expensive telephone might not offer such services.

Thus, when a new portable communications device is designed, the designer decides which services are to be offered bv the device and determines the specifications of parts required to build a device which is able to provide all of those services simultaneously provided that all necessary variable requirements are satisfied - such as there being a sufficient power supply, etc. During normal use of such a device, once it has been manufactured, the device will generally provide all of the services which it has been designed to provide unless or until the power supply gives up, for example as a result of battery depletion.

EP0365200 discloses an arrangement for allowing a subscriber to select telephone features from the subscriber terminal. The terminal may be reconfigured to provide the newly selected set of features by receiving a software package transmitted from a central office.

W09729606 discloses a method for allowing upgrade programs to be provided automatically from a base station to a mobile telephone. A check is made to establish if the mobile telephone is able to accept the data. If it is not so capable (for example because it has insufficient memory), the process is repeated with different programs until a program is identified for which there is sufficient capacity in the memory.

### Summary of the Present Invention

According to a first aspect of the present invention, there is provided a method of service selection for a device comprising the steps of generating one or more physical capability parameters of the device, generating one or more service requirement parameters of services available to the device, generating one or more user requirement parameters input to the device, calculating service selection data on the basis of the physical capability, service requirement and user requirement parameters, and outputting the service selection data thus calculated whereby the services offered by the device may be varied in dependence upon the service selection data.

The method is advantageously employed during normal usage of the device, during testing of the device and when the device is downloading software. Also, the term "device" is intended to include both an entire consumer product and a component for use in such a product. Preferably the device is a portable communications device or a component part thereof such as a microprocessor, Digital Signal Processor (DSP) or memory.

Such a method of service selection for use in operating a device has a number of advantages over conventional methods of operating a device. These advantages largely arise because different services have different service requirements, with more high end services having greater service requirements. In particular, more high end services frequently require more power consumption and more processing power in terms of Millions of Instructions Per Second (MIPS). The present invention enables a portable communications device to be much more flexible and able to adapt to a particular user's needs on a dynamic basis. Thus, a device may "offer" a user a number of services but with the flexibility to choose not to employ certain services in certain circumstances. In this way, a single device may be able to operate, for example, either as a device which has a long operation time between battery rechargings or as a device which has a large number of luxury services but a smaller operation time between rechargings.

Furthermore, according to the present invention, it is possible to use component parts in the manufacture of a device which might otherwise have been discarded for being below specification. Also, component parts which are significantly above specification can be utilised in a way which brings a significant, discernible improvement to the assembled product in terms of the number of services simultaneously offerable compared with other products incorporating less high specification components.

According to a preferred embodiment of the present invention, there is provided a method of testing a microprocessor or DSP for use in a portable communications device, the method comprising the steps of the first aspect of the present invention wherein the step of generating one or more physical capability parameters includes assessing the processing power of the microprocessor or DSP in terms of MIPS and the step of outputting service selection data includes outputting data representative of which services and sets of services are able to be supported by the microprocessor or DSP. Preferably, all of these steps are carried out by testing apparatus which is used to test the microprocessor or DSP.

According to another preferred embodiment of the present invention, there is provided a method of downloading software into a portable communications device for implementing a new service to be offered by the device, wherein as a first step in the downloading process only service requirement parameters of the new service to be implemented are downloaded and wherein the service selection data determines whether or not the remainder of the software is downloaded.

According to a second aspect of the present invention, there is provided service selection apparatus for a device, the apparatus comprising physical capability assessment means for generating one or more physical capability parameters of the device, service requirement assessment means for generating one or more service requirement parameters of services available to the device, user requirement assessment means for generating one or more user requirement parameters input to the device, and a processor for calculating service selection data on the basis of the physical capability, service requirement and user requirement parameters, and for outputting the service selection data thus calculated whereby the operation of the device in terms of which services are to be provided may be varied in dependence upon the service selection data.

### Brief Description of the Drawings

In order that the present invention may be better understood, embodiments thereof will now be described by way of example only with reference to the accompanying drawings in which the sole Figure is a block diagram of a portable communications device incorporating apparatus for service selection for a device according to the present invention.

### Detailed Description

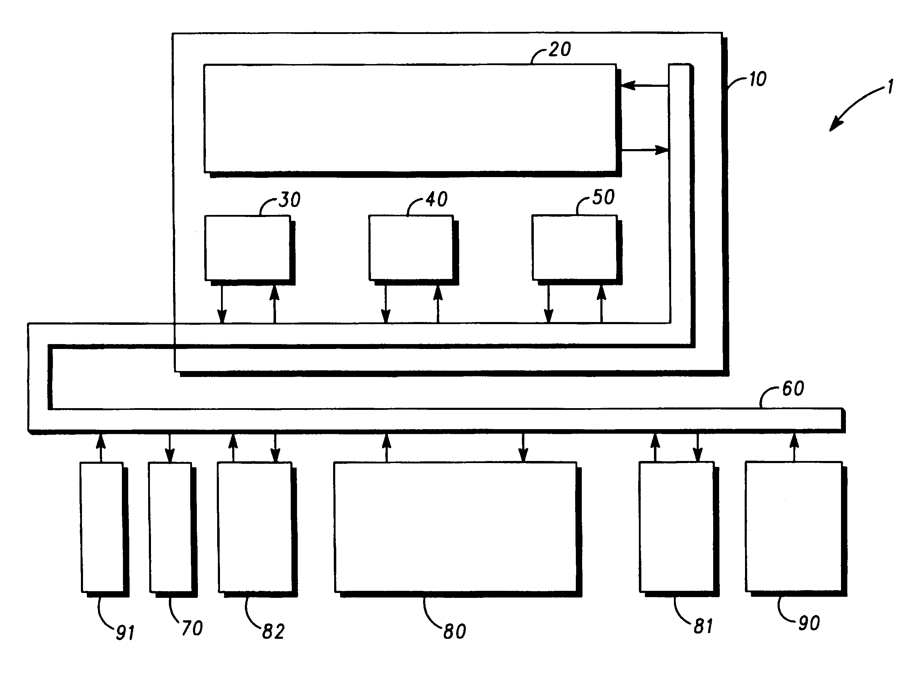

Figure 1 shows a portable communications device 1 which comprises service selection apparatus 10 and further elements 60, 70, 80, 81, 82, 90, 91 of the device 1, with which the service selection apparatus 10 interacts. The further elements of the device include one or more receive elements such as an LED display 70 or speaker (not shown) which simply receive operational instructions from other parts of the device 1 and output information to a user; receive and transmit elements which both receive and transmit signals from and to other elements in the device and/or external to the device and include, for example, a principal processing unit 80, a memory 81, a front end 82 (which includes a power amplifier and other transceiver elements), an antenna (not shown), etc.; and transmit elements such as a battery unit 90 which might only transmit information to other elements of the device 1, and an input device 91 such as a keyboard or microphone which receives input from outside the device and passes it on to other elements within the device 1. The device 1 also includes communication means 60 for enabling the flow of information between elements within the device 1. In the Figure communication means 60 is represented as a data-bus which can communicate with all of the elements of the device 1.

With the exception of the service selection apparatus 10, the elements and arrangement of device 1 is state of the art and will not be described in further detail unless necessary for explaining the operation of service selection apparatus 10.

Service selection apparatus 10 comprises a processor 20, physical capability assessment means 30, service requirement assessment means 40 and user requirement assessment means 50. Of course, Figure 1 is a schematic diagram only which is intended to illustrate the relationship between various elements of the device 1 in terms of information flows between the various elements shown and is not intended to provide any information about the physical shape, size, construction or location of any of the elements shown in relation to one another.

The physical capability assessment means 30 is connected so as to receive information about various physical capabilities of the device 1. For example, physical capability assessment means 30 is adapted to receive information about the state of the battery unit 90, the capacity of the memory 81 and the maximum processing power of the principal processing unit 80. Note, that the memory has been shown here as a single unit for simplicity though it is in fact more complicated, as will be well understood by a person skilled in the art; for example, the memory is likely to include some high speed volatile memory and some slower non-volatile memory; also, the memory includes some data memory at least some of which is required by all software controlled services for storing data to be manipulated by the software, and some program memory which is required for storing the software code associated with each service.

Additionally, there may be other physical capability information which the physical capability assessment means 30 will need to receive such as that associated with the front end 82. For example, the maximum rate at which data can be transmitted by the device will depend upon hardware considerations of the front end such as whether it is configured to operate as a half-duplex transceiver or a full duplex transceiver. There may also be other physical capability information which may be specific to the portable communications device which the physical capability assessment means 30 could usefully receive.

Clearly, some of this information will be very dynamic in the sense that it is constantly changing (e.g. the state of depletion of the battery unit) and will generally require a suitable sensor (e.g. a battery sensor) to generate the required information. On the other hand, some types of physical capability information (e.g. the power of principal processing unit 80, the amount of data memory avilable to the device, the maximum data transmission rate) are fairly stable over time (at least for certain given conditions such as temperature, supply voltage value, etc.) and it may be convenient to store such information in memory 81, rather than having to re-measure the processing power every time such information is required. Of course, in order to account for deterioration of the processing power over time it may be advantageous to periodically update such information.

Additionally, it may be advantageous to include various sensors such as temperature and humidity sensors which can also provide physical capability information to the physical capability assessment means 30 since details of the physical capabilities may be affected by such external environmental factors.

The service requirement assessment means 40 is connected so as to be able to receive information about the requirements of one or more services available to the device 1. Such information may conveniently be stored in the memory 81. Additionally, such information could be input to the device 1 from the exterior as part of an attempt to download a new service to be offered by the device 1. Service requirement information will generally include information about the amount of processing power required by the service, the amount of data memory required to run the software associated with the service, the amount of program memory required to store the associated code, the data transmission rate required, etc.

The user requirement assessment means 50 is connected so as to be able to receive information about the requirements of one or more users of the device 1. Such information may conveniently be input to the device 1 by one or more users of the device via, for example, an input device such as a keyboard or microphone or via a data transmission. Additionally, such information could be stored in the memory 81 so that the same information does not need to be input to the device on each occasion that it is required by the user requirement assessment means 50, where the user requirement information remains unchanged.

The processor 20 forming part of the service selection apparatus 10, is connected to receive parameters from the assessment means 30, 40, 50 and to output operating data to other elements of the device. In particular, it is able to output operating data to the principal processing unit 80. Note that although processor 20 is shown as being separate from the principal processing unit 80 it will be apparent to readers skilled in the art that in practice processor 20 is likely to be the same as, or a part of, principal processing unit 80 which is likely to take the form of a single Digital Signal Processor (DSP) or a microcontroller or both.

During normal usage of the device 1, there are a number of services which the device is theoretically capable of offering, but which services are actually offered by the device is determined according to the following service selection method. The physical capability assessment means 30 generates a number of physical capability parameters such as a state of battery parameter which provides an indication of how charged/depleted the battery is, a processing power parameter indicating how many MIPS the principal processor 80 is capable of processing for an optimum power consumption at a particular temperature and memory available parameters indicating the amounts of data memory and program memory which are free. It may also generate temperature and/or humidity parameters.

Suitable circuits for generating information about the state of battery unit 90 or the processing power of processing unit 80 are well known in the art and will not be described in detail other than to note that such circuits could be incorporated into the physical capability assessment means 30 or they could be considered as forming a part of the remainder of the device 1 although they are not explicitly shown in the Figure.

The service requirement assessment means generates service requirement parameters of some or all of the services which the device is theoretically capable of offering, such service requirement parameters including a processing requirement parameter indicating how much processing power is required by the service in question, a power parameter indicating how much battery power is consumed by the service, a bandwidth parameter indicating how much bandwidth is required by the service and a cost parameter indicating how expensive the service is. It should be noted that some of these parameters may involve a number of interrelated factors. For example, the rate at which enrgy from the battery is consumed will depend upon its consumption by a number of different elements of the device; thus operating in a half rate voice coding mode will cause the processing unit 80 to consume more power from the battery though the front end 82 will generally consume less.

Such service requirement parameters will generally be stored in memory 81 such that the step of generating the parameters primarily involves reading the relevant part of the memory 81.

The user requirement assessment means 50 generates one or more user requirement parameters. Such parameters might, for example, include an essentiality parameter indicating the relative essentiality of various services to the user, an on-time parameter indicating how long the user requires the device to remain operational before the battery unit can be recharged, a budget parameter indicating how much money the user is prepared to spend on using the device, etc. These parameters may be entered by the user on a dynamic basis via input device 91 or they may be stored in memory 81. Typically, the user of the device 1 under normal usage circumstances will be the consumer who owns the device 1, however, under certain circumstances, the network operator may wish to download new user requirements to the device and the assessment means 50 is able to assess information received in this way.

Finally, the processing unit 20 calculates service selection data on the basis of the various parameters generated by the assessment means 30, 40, 50. The service selection data thus generated represents an optimised selection of services to be offered to the user on the basis of the user requirements. This service selection data is then output to other elements of the device 1 and controls which services are offered to the user.

According to a further aspect of the present invention, a similar service selection method is applied to a processor intended to form a component of a portable communications device during testing of the processor after its manufacture. According to this method a processing power parameter of the processor is generated by a physical capability assessment means which is preferably a testing computer. Processing requirement parameters are then generated by service requirement assessment means for a number of different services which the portable communications device might potentially be able to offer - in practice this step simply involves looking up the processing requirement parameters from a memory location. Finally, user requirement parameters indicating various different sets of services which the component would have to support in different portable communication devices which it could potentially be incorporated into are generated by user requirement assessment means. A processing unit then calculates service selection data which indicates which one or more portable communication devices the processor is suitable for incorporation into.

As a further example of the use of the present invention, when portable communications device 1 attempts to download a new service in the form of a piece of software, the method of downloading the software initially comprises downloading only service requirement parameters such as a processing requirement parameter of the service and a memory requirement parameter. Thereafter, the method continues as before except that the service selection data output by processing unit 20 additionally indicates whether or not the new service can be supported by the device 1 and controls whether or not to continue with the downloading of the software.

A particular advantage of the present invention is that it is well suited to the incorporation of intelligent agent technology which enables superior management of portable communications devices such as device 1. As mentioned above, user requirement parameters may be received via the network service provider. Where this occurs it is possible for the user requirement parameters to be generated by an intelligent agent which monitors the operation of the device and observes patterns of use which can then be used to maximise the performance of the device 1 without active involvement of the user.

The device preferably incorporates a circuit for dynamically adjusting the power consumption of the device versus the processing power of the device such as those described in French published patent application No. FR-2,752,312. When such circuits or methods of performing the dynamic adjustments are incorporated, the processing unit 20 may additionally output control signals for dynamically adjusting the processing power and power consumption of the device 1 in order to be able to optimise the service selection data.

## Claims

1. A method of service selection for a device comprising the steps of generating one or more physical capability parameters of the device, generating one or more service requirement parameters of services available to the device, generating one or more user requirement parameters input to the device, calculating service selection data on the basis of the physical capability, service requirement and user requirement parameters, and outputting the service selection data thus calculated whereby the services offered by the device may be varied in dependence upon the service selection data.

2. A method as claimed in claim 1 wherein the device is a portable communications device.

3. A method as claimed in either one of the preceding claims wherein user requirement information is supplied to the device by an intelligent agent.

4. A method as claimed in any one of the preceding claims wherein at least one of the services whose service requirement parameters is generated is a new service which the device is attempting to download.

5. A method as claimed in any one of the preceding claims wherein the service requirement parameters generated are a processing requirement parameter and a memory requirement parameter.

6. A method as claimed in any one of the preceding claims further comprising the step of adjusting the processing power capability of the device by inversely adjusting the power consumption of the device.

7. A method as claimed in claim 1 wherein the device is a processor for incorporation into a portable communications device.

8. A method as claimed in claim 7 wherein the physical capability parameter generated is a processing power parameter of the processor, wherein the service requirement parameters generated are processing requirement parameters and wherein the user requirement parameters are sets of services which the processor would have to support in different portable communication devices into which it could potentially be incorporated.

9. Service selection apparatus for a device, the apparatus comprising physical capability assessment means (30) for generating one or more physical capability parameters of the device (1), service requirement assessment means (40) for generating one or more service requirement parameters of services available to the device (1), user requirement assessment means (50) for generating one or more user requirement parameters input to the device (1), and a processor (20) for calculating service selection data on the basis of the physical capability, service requirement and user requirement parameters, and for outputting the service selection data thus calculated whereby the operation of the device (1) in terms of which services are to be provided may be varied in dependence upon the service selection data.

## Patentansprüche

1. Verfahren zur Dienstauswahl für eine Vorrichtung, welches die Schritte aufweist, einen oder mehrere technische Leistungsfähigkeitsparameter der Vorrichtung zu erzeugen, einen oder mehrere Dienstanforderungsparameter von für die Vorrichtung verfügbaren Diensten zu erzeugen, einen oder mehrere in die Vorrichtung eingegebene Benutzeranforderungsparameter zu erzeugen, Dienstauswahldaten basierend auf dem technischen Leistungfähigkeits-, dem Dienstanforderungs- und dem Benutzeranforderungsparameter zu berechnen, und die somit berechneten Dienstauswahldaten auszugeben, wobei die von der Vorrichtung angebotenen Dienste abhängig von den Dienstauswahldaten variiert werden können.

2. Verfahren nach Anspruch 1, **dadurch gekennzeichnet, dass** die Vorrichtung eine tragbare Kommunikationsvorrichtung ist.

3. Verfahren nach einem der vorhergehenden Ansprüche, **dadurch gekennzeichnet, dass** Benutzeranforderungsinformationen von einem intelligenten Agenten an die Vorrichtung geliefert werden.

4. Verfahren nach einem der vorhergehenden Ansprüche, **dadurch gekennzeichnet, dass** mindestens einer der Dienste, deren Dienstanforderungsparameter erzeugt werden, ein neuer Dienst ist, welchen die Vorrichtung herunterzuladen versucht.

5. Verfahren nach einem der vohergehenden Ansprüche, **dadurch gekennzeichnet, dass** die erzeugten Dienstanforderungsparameter ein Bearbeitungsanforderungsparameter und ein Speicheranforderungsparameter sind.

6. Verfahren nach einem der vorhergehenden Ansprüche, welches des Weiteren den Schritt der Anpassung der Bearbeitungsenergie-Leistungsfähigkeit der Vorrichtung durch umgekehrte Anpassung des Energieverbrauchs der Vorrichtung aufweist.

7. Verfahren nach Anspruch 1, **dadurch gekennzeichnet, dass** die Vorrichtung ein Prozessor für den Einbau in eine tragbare Kommunikationsvorrichtung ist.

8. Verfahren nach Anspruch 7, **dadurch gekennzeichnet, dass** der erzeugte technische Leistungsfähigkeitsparameter ein Bearbeitungsenergieparameter des Prozessors ist, wobei die erzeugten Dienstanforderungsparameter Bearbeitungsanforderungsparameter sind und wobei die Benutzeranforderungsparameter Zusammenstellungen von Diensten sind, welche der Prozessor in verschiedenen tragbaren Kommunikationseinrichtungen, in welche er möglicherweise eingebaut werden könnte, unterstützen müsste.

9. Dienstauswahlvorrichtung für ein Gerät, wobei die Vorrichtung Einrichtungen (30) zur Feststellung der technischen Leistungsfähigkeit aufweist, um einen oder mehrere technische Leistungsfähigkeitsparameter des Geräts (1) zu erzeugen, Einrichtungen (40) zur Feststellung der Dienstanforderung aufweist, um einen oder mehrere Dienstanforderungsparameter von für das Gerät (1) verfügbaren Diensten zu erzeugen, Einrichtungen (50) zur Feststellung der Benutzeranforderung aufweist, um einen oder mehrere in das Gerät (1) eingegebene Benutzeranforderungsparameter zu erzeugen, und einen Prozessor (20) aufweist, um Dienstauswahldaten basierend auf der technischen Leistungsfähigkeit, Dienstanforderungs- und Benutzeranforderungsparametern zu berechnen, und um die somit berechneten Dienstauswahldaten auszugeben, wobei der Betrieb des Geräts (1) in Hinblick darauf, welche Dienste bereitgestellt werden sollen, abhängig von den Dienstauswahldaten variiert werden kann.

## Revendications

1. Procédé pour la sélection de services pour un dispositif comprenant les étapes consistant à générer un ou plusieurs paramètres de capacité physique du dispositif, générer un ou plusieurs paramètres de demande de services disponibles pour le dispositif, générer un ou plusieurs paramètres de demande utilisateur entrés dans le dispositif, calculer des données de sélection de service sur la base des paramètres de la capacité physique, de la demande de service et de la demande utilisateur, et émettre les données de sélection de service ainsi calculées par quoi les services offerts par le dispositif peuvent être modifiés en fonction des données de sélection de service.

2. Procédé selon la revendication 1, où le dispositif est un dispositif de communication portable.

3. Procédé selon l'une des revendications précédentes, où les informations de demande utilisateur sont fournies au dispositif par un agent intelligent.

4. Procédé selon l'une des revendications précédentes, où au moins l'un des services dont les paramètres de demande de service sont générés, est un nouveau service que le dispositif cherche à télécharger.

5. Procédé selon l'une des revendications précédentes, où les paramètres de demande de service produits sont un paramètre de demande de traitement et un paramètre de demande de mémoire.

6. Procédé selon l'une des revendications précédentes, comprenant en outre l'étape consistant à régler la capacité de puissance de traitement du dispositif en ajustant inversement la consommation de puissance du dispositif.

7. Procédé selon la revendication 1, où le dispositif est un processeur pour l'incorporation dans un dispositif de communication portable.

8. Procédé selon la revendication 7, où le paramètre de capacité physique produit est un paramètre de puissance de traitement du processeur, où les paramètres de demande de service générés sont des paramètres de demande de traitement, et où les paramètres de demande utilisateur sont des ensembles de services que le processeur devrait avoir à supporter dans différents dispositifs de communication portables dans lesquels il pourrait être potentiellement incorporé.

9. Appareil de sélection de service pour un dispositif, l'appareil comprenant des moyens d'appréciation de capacité physique (30) pour produire un ou plusieurs paramètres de capacité physique du dispositif (1), des moyens d'appréciation de demande de service (40) pour produire un ou plusieurs paramètres de demande de services disponibles pour le dispositif (1), des moyens d'appréciation de demande utilisateur (50) pour produire un ou plusieurs paramètres de demande utilisateur entrés dans le dispositif (1) et un processeur (20) pour calculer des données de sélection de service sur la base des paramètres de capacité physique, de demande de service et de demande utilisateur, et pour émettre les données de sélection de service ainsi calculées par quoi le fonctionnement du dispositif (1) en termes de fourniture de services peut être modifié en fonction des données sélectionnées de service.
